# EUROPÄISCHE PATENTANMELDUNG

(11) **EP 2 107 345 A1**
(43) Veröffentlichungstag der Anmeldung: **07.10.2009**
(21) Anmeldenummer: 08006229.2
(22) Anmeldetag: 31.03.2008
(51) Int. Cl.: G01D 11/24, G01D 11/26, G01L 19/14

(54) **Füllstand- und Druckmessgerät mit einem topfförmigen Gehäusedeckel**

(71) Anmelder: VEGA Grieshaber KG, 77709 Wolfach (DE)
(72) Erfinder: Dietmeier, Jürgen, 77756 Hausach (DE)
(74) Vertreter: Göhring, Robert

(57) **Zusammenfassung**

Füllstand- oder Druckmessgerät mit einem topfförmigen Gehäusedeckel (1) mit einer zylindrischen Seitenwandung (10) und einem bodenseitig festgelegten Schauglas (4), wobei das Schauglas (4) mit einem Bajonettverschluss gehalten ist.

## Beschreibung

Die Erfindung betrifft ein Füllstand- oder Druckmessgerät mit einem topfförmigen Gehäusedeckel gemäß Oberbegriff des Patentanspruchs 1.

Füllstand- oder Druckmessgeräte mit topfförmigem Gehäusedeckeln sind aus dem Stand der Technik bekannt. Die Gehäusedeckel für derartige Füllstand- oder Druckmessgeräte weisen eine zylindrische Seitenwandung und ein bodenseitig festgelegtes Schauglas auf. Die bekannten Gehäusedeckel sind dabei sowohl in einer metallischen Ausführung als auch als Kunststoffteile verfügbar. In der Kunststoffausführung wird ein bodenseitig in dem Gehäusedeckel festgelegtes Sichtfenster direkt bei der Ausformung des Gehäusedeckels in einem Kunststoff-Spritzguss-Verfahren mit umspritzt und ist damit in dem Gehäusedeckel fixiert. Als metallische Ausführung sind einerseits Aluminium-Druckgussteile und andererseits Edelstahl-Drehteile bekannt. Der Gehäusedeckel ist dabei in beiden Fällen derart ausgeformt, dass er bodenseitig einen umlaufenden Rand aufweist, auf dem das Schauglas zu liegen kommt, wobei das Schauglas rückseitig durch einen in eine umlaufende Nut des Gehäusedeckels eingebrachten Sprengring gehalten wird. Eine derartige Befestigung ist jedoch nur möglich, wenn die Seitenwandung des Gehäusedeckels umlaufend eine ausreichende Wandstärke zum Einbringen einer Nut aufweist. Eine Fertigung entsprechender Gehäusedeckel beispielsweise aus Stahlblech ist aufgrund der dünnen Gehäusewandung und der damit verbundenen, mangelhaften Befestigungsmöglichkeit für Schaugläser bislang nicht möglich.

Hier setzt die vorliegende Erfindung an.

Die Erfindung hat die Aufgabe, einen topfförmigen Gehäusedeckel mit einer zylindrischen Seitenwandung und einem bodenseitig festgelegten Schauglas für ein Füllstand- oder Druckmessgerät derart weiterzubilden, dass dieser auch dünnwandige Gehäusewandungen, beispielsweise aus Metallblech aufweisen kann.

Diese Aufgabe wird gelöst durch ein Füllstand- oder Druckmessgerät mit einem topfförmigen Gehäusedeckel mit den Merkmalen des Patentanspruchs 1.

Vorteilhafte Weiterbildungen sind Gegenstand der Unteransprüche.

Ein erfindungsgemäßes Füllstand- oder Druckmessgerät weist einen topfförmigen Gehäusedeckel mit einer zylindrischen Seitenwandung und einem bodenseitig festgelegten Schauglas auf, wobei das Schauglas mit einem Bajonettverschluss gehalten ist. Ein Gehäusedeckel, bei dem das Schauglas mit einem Bajonettverschluss gehalten ist hat den Vorteil, dass der Gehäusedeckel sowohl, wie aus dem Stand der Technik bekannt, als Aluminium-Druckgussteil, als Edelstahl-Drehteil oder als Kunststoff-Spritzgussteil gefertigt werden kann aber auch eine Fertigung aus einem dünneren Material, beispielsweise einem Blech möglich ist.

Um eine vorderseitig formschlüssige Anordnung des Schauglases sowie eine Fixierung des Bajonettverschlusses zu erreichen, ist es vorteilhaft, wenn zwischen dem Schauglas und dem Bajonettverschluss eine Federanordnung vorgesehen ist. Diese Federanordnung kann beispielsweise als umlaufend wellenförmig ausgebildeter Federring ausgestaltet sein. Durch diesen Federring wird erreicht, dass der Bajonettverschluss und das Schauglas unter einem axialen Druck in dem Gehäusedeckel sitzen und so gewährleistet wird, dass einerseits das Schauglas vorderseitig an den umlaufenden Rand angepresst wird und andererseits rückseitig ein durch Vibrationen verursachtes Aufdrehen des Bajonettverschlusses unterbunden wird.

In einer Weiterbildung der Erfindung ist der Gehäusedeckel aus einem Blech geformt und beispielsweise durch Tiefziehen hergestellt. Eine Herstellung des Gehäusedeckels aus einem Blech, beispielsweise einem V2A-Stahlblech hat den Vorteil, dass ein derartiger Gehäusedeckel eine gut reinigbare und gegen Korrosion widerstandsfähige Oberfläche bietet, wie sie beispielsweise in der Lebensmittel- oder Chemieindustrie zwingend notwendig ist. Ein aus einem Blech durch Tiefziehen hergestellter Gehäusedeckel hat außerdem den Vorteil, dass im Vergleich zu einem Spritzguss- oder Drehteil eine erhebliche Materialersparnis zu verzeichnen ist.

Um das Schauglas in einer definierten Ebene festzulegen, ist es vorteilhaft, wenn der Gehäusedeckel bodenseitig einen umlaufenden Rand als Auflagefläche für das Schauglas aufweist. Zwischen dem Schauglas und dem Rand kann außerdem ein Dichtelement vorgesehen sein, dass eine vorderseitige Abdichtung gegen eine Prozessatmosphäre gewährleistet. Das Dichtelement kann beispielsweise als umlaufender O-Ring oder als eine Silikon-Formdichtung ausgestaltet sein.

Um eine zentrierte Ausrichtung des Dichtelements und/oder des Schauglases zu gewährleisten, ist es sinnvoll, wenn zusätzlich ein Zentrierring vorgesehen ist, der das Dichtelement und/oder das Schauglas entsprechend zur Gehäusewandung beabstandet. Ein solcher Zentrierring kann beispielsweise auch einteilig mit dem Dichtelement ausgebildet sein und ist bevorzugterweise aus Kunststoff gefertigt.

Bei einem Gehäusedeckel, der aus einem Blech gefertigt ist, ist es vorteilhaft, wenn ein Widerlager für den Bajonettverschluss durch wenigstens zwei Sicken gebildet ist. Alternativ ist es auch möglich, das Widerlager für den Bajonettverschluss durch in einer Ebene linienförmig angeordnete Körnungen bereitzustellen. Der Bajonettverschluss ist dabei durch einen Spannring gebildet, der korrespondierend zu den Sicken oder Körnungen Freistellungen aufweist, die zum Einführen des Spannrings dienen. Nach einem Verdrehen des Spannrings ist dieser dann unter den nach innen vorspringenden Sicken oder Körnungen fixiert und damit der Bajonettverschluss verriegelt.

Um ein leichteres Verdrehen des Bajonettverschlusses bei der Montage zu gewährleisten, können an dem Bajonettverschluss zusätzliche Ausnehmungen als Verdrehhilfe vorgesehen sein.

Die Erfindung wird nachfolgend anhand von zwei Ausführungsbeispielen unter Bezugnahme auf die beigefügten Figuren ausführlich erläutert. In den Figuren sind identische oder funktionsgleiche Bauelemente mit identischen Bezugszeichen versehen.

### Es zeigen:

- Figur 1a und 1b: Je eine Explosionszeichnung eines ersten Ausführungsbeispiels eines erfindungsgemäßen Gehäusedeckels aus verschiedenen Perspektiven,
- Figur 2a: eine perspektivische Darstellung des Ausführungsbeispiels aus den Figuren 1a und 1b in zusammengebautem Zustand,
- Figur 2b: eine Unteransicht des Gehäusedeckels aus Figur 2a,
- Figur 2c: einen Schnitt durch den Gehäusedeckel aus Figur 2b entlang der Linie A-A,
- Figur 3a: eine perspektivische Darstellung eines zweiten Ausführungsbeispiels eines Gehäusedeckels in zusammengebautem Zustand,
- Figur 3b: eine Unteransicht des Gehäusedeckels aus Figur 3a und
- Figur 3c: einen Schnitt durch den Gehäusedeckel aus Figur 3b entlang der Linie B-B.

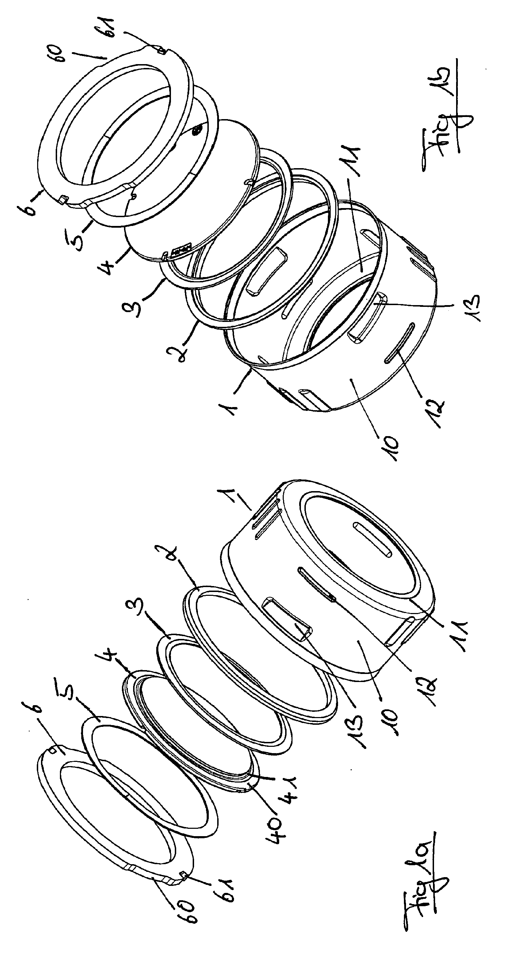

Die Figuren 1a und 1b zeigen je eine Explosionsdarstellung eines erfindungsgemäßen Gehäusedeckels für ein Füllstand- oder Druckmessgerät in unterschiedlicher Perspektive. Bis auf den unterschiedlichen Blickwinkel sind die Darstellungen jedoch identisch und werden daher gemeinsam erläutert.

In beiden Figuren ist ein topfförmiger Gehäusedeckel 1 mit einer zylindrischen Seitenwandung 10 gezeigt, der bodenseitig einen umlaufenden Rand 11 aufweist. Der Gehäusedeckel 1 ist durch ein Tiefziehverfahren aus einem Stahl-Blech geformt und weist auf der Seitenwandung 10 zwei sich ins Gehäuseinnere erstreckende rinnenförmige Sicken 12 als Widerlager für einen Bajonettverschluss auf. Des Weiteren sind in die Seitenwandung 10 zwei Gewindeeingriffe 13 eingebracht, die geeignet ausgebildet sind, den Gehäusedeckel 1 auf ein Füllstand- oder Druckmessgerät aufzuschrauben. Die Figuren 1a und 1b zeigen des Weiteren in Montagereihenfolge einen Zentrierring 2 und einen Dichtring 3. Der Zentrierring 2 ist aus Kunststoff gefertigt und derart in den Gehäusedeckel 1 einbringbar, dass er den Dichtring 3 umlaufend von der Seitenwandung 10 beanstandet und an einer Innenkante des umlaufenden Randes 11 ausrichtet. Der Dichtring 3 ist dabei als Silikon-Formdichtung ausgestaltet. Der Zentrierring 3 ist des Weiteren so ausgestaltet, dass ein Schauglas 4, das bevorzugt aus einem durchsichtigen Kunststoff gefertigt ist, ebenfalls umlaufend zur Seitenwandung 10 beabstandet in dem Gehäusedeckel 1 zu liegen kommt. Das Schauglas 4 weist dabei bezogen auf seine Vorderseite eine umlaufende Stufe 41 auf, durch die ein umlaufender Rand 40 in Breite der Silikon-Formdichtung 3 gebildet ist, der auf derselbigen zu liegen kommt. Durch die umlaufende Stufe 41 wird des Weiteren erreicht, dass das Schauglas im zusammengebauten Zustand des Gehäusedeckels 1 vorderseitig plan mit dem Gehäusedeckel 1 abschließt. Auf dem Schauglas 4 kommt rückseitig ein Federring 5 zu liegen, der nach einem Verschließen des Bajonettverschlusses einen axialen Druck des Schauglases 4 auf die Silikonformdichtung 3 gewährleistet und gleichzeitig ein durch Vibrationen induziertes Aufdrehen des Bajonettverschlusses verhindert. Der eigentliche Bajonettverschluss wird durch einen Spannring 6 gebildet. Der Spannring 6 weist zwei an seinem Umfang angeordnete Freistellungen 60 auf, die korrespondierend zu den Sicken 12 an der Seitenwandung des Gehäusedeckels 1 angeordnet sind, um ein Einführen des Spannrings 6 in den Gehäusedeckel 1 zu ermöglichen. Zusätzlich sind zwei Ausnehmungen 61 vorgesehen, die beim Verriegeln des Bajonettverschlusses als Verdrehhilfe dienen. Der Spannring 6 wird bei der Montage des Gehäusedeckels 1 in einer Presse unter axialem Druck in das Gehäuse eingebracht und unter Druck stehend verdreht, so dass der Umfang des Spannring 6 unter den Sicken 12a zu liegen kommt. Wird in diesem Zustand der Druck der Presse weggenommen, so entspannt sich der Federring 5 wenigstens teilweise und hält eine Spannung zwischen dem Schauglas 4 und dem Spannring 6 aufrecht, so dass das Schauglas 4 vorderseitig gegen die Silikon-Formdichtung 3 gepresst wird und rückseitig über den Spannring ein axial verlaufender Druck auf die Sicken 12a ausgeübt wird. Die Anordnung steht damit permanent unter Spannung, was ein Aufdrehen des Bajonettverschlusses verhindert.

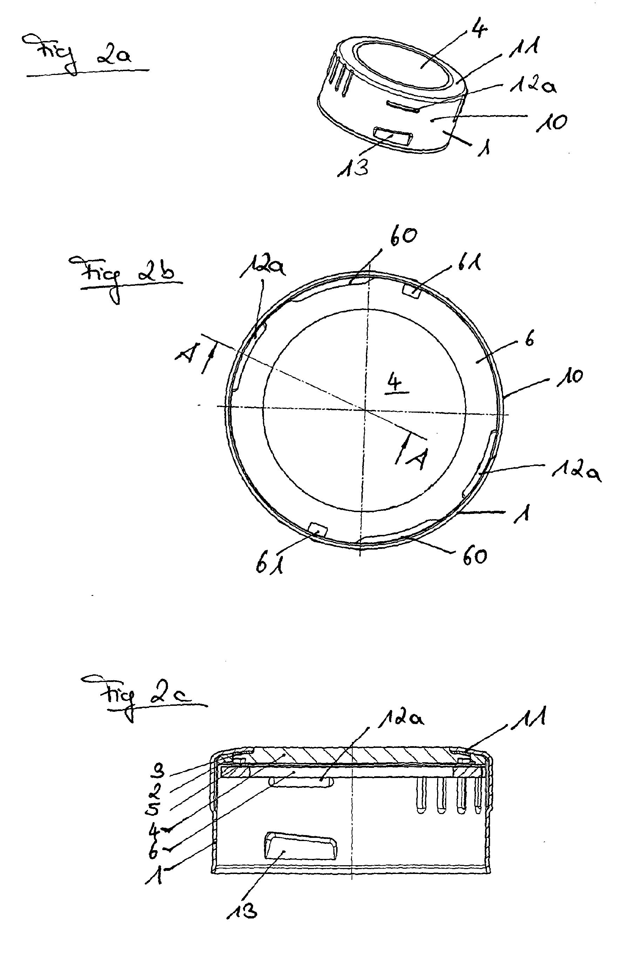

Figur 2a zeigt eine perspektivische Darstellung des eben beschriebenen Gehäusedeckels 1 in zusammengebautem Zustand. In dieser Darstellung ist besonders gut zu erkennen, dass das Schauglas 4 frontbündig mit dem Rand 11 des Gehäusedeckels 1 abschließt und dadurch eine kanten- und spaltfreie Oberseite des Gehäusedeckels 1 gebildet wird. Ebenfalls gut zu erkennen ist in Figur 2a eine der Sicken 12a, die als Widerlager 12 für den Spannring 6 im Inneren des Gehäuses dient sowie das ebenfalls sickenförmig in die Seitenwandung 10 eingebrachte Gewinde 13.

Figur 2b zeigt eine Unteransicht des Gehäusedeckels 1 aus Figur 2a. Der Gehäusedeckel 1 ist in Figur 2b ebenfalls im zusammengebauten Zustand dargestellt, d.h. dass der Spannring 6 im Vergleich zu einer Stellung während des Zusammenbaus verdreht in dem Gehäusedeckel 1 liegt. In Figur 2b sind besonders deutlich die nach innen ragenden als Widerlager dienenden Sicken 12a zu erkennen, unter denen der Umfang des Spannrings 6 zu liegen kommt, wodurch ein Verklemmen des Bajonettverschlusses gewährleistet ist. In dieser Unteransicht sind außerdem die Freistellungen 60 am Umfang des Spannrings 6 zu erkennen, die derart ausgebildet sind, dass sie ein Einbringen des Spannrings 6 über die Sicken 12a hinweg ermöglichen. Weiterhin sind die ebenfalls am Umfang des Spannrings 6 angeordneten Ausnehmungen 61 zu erkennen, in die bei der Montage ein Verdrehwerkzeug eingreift um so das Verdrehen des Spannrings 6 zu ermöglichen. Bei der Montage des Spannrings 6 ist zu beachten, dass eine Verdrehung ausgeführt wird, die wenigstens so groß ist, dass in einer Endposition des Spannrings keine Überlappung der Sicken 12 mit den Freistellungen 60 bestehen. Im dargestellten Ausführungsbeispiel wird dies durch eine Verdrehung im Uhrzeigersinn zwischen 45° und 90° erreicht.

Figur 2c zeigt eine Seitenansicht eines Schnitts durch den Gehäusedeckel 1 aus Figur 2b entlang der Linie A-A. In dieser Darstellung ist nochmals besonders deutlich der frontbündige Abschluss zwischen dem umlaufenden Rand 11 des Gehäusedeckels 1 und dem stufenförmig ausgebildeten Schauglas 4 zu erkennen. Des Weiteren ist in Figur 2c gezeigt, wie die Silikon-Formdichtung 3 und das Schauglas 4 durch den Zentrierring 2 umlaufend zur Seitenwandung 10 beabstandet und dadurch zentriert ausgerichtet werden. Durch den eingebrachten und verdrehten Spannring 6 wird der Federring 5 gespannt und übt dadurch einen Druck in axialer Richtung des Gehäusedeckels 1 aus.

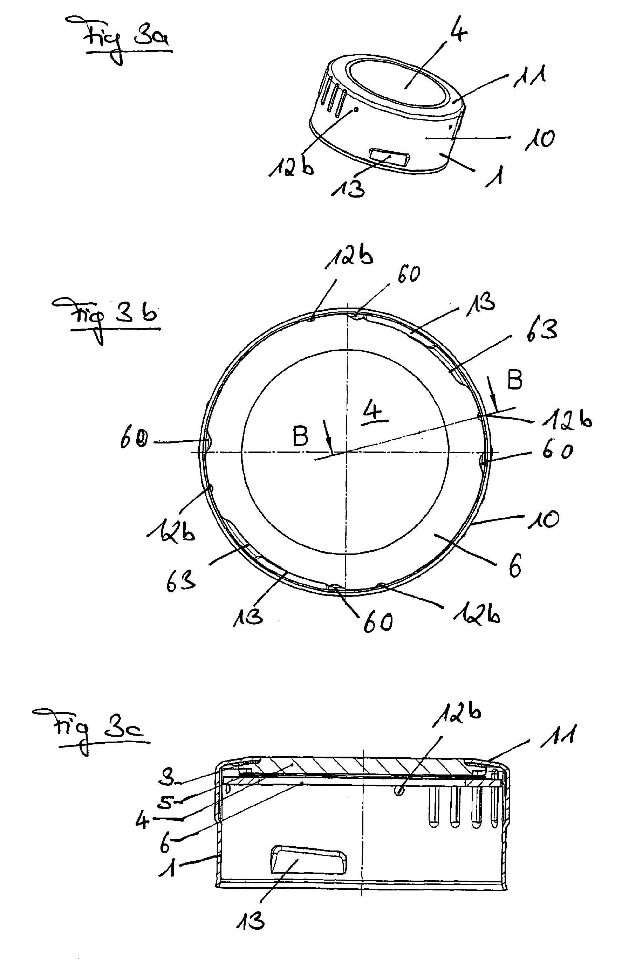

Die Figuren 3a bis 3c zeigen die Ansichten aus den Figuren 2a bis 2c für ein weiteres Ausführungsbeispiel eines erfindungsgemäßen Gehäusedeckels für ein Füllstand- oder Druckmessgerät. Im Unterschied zu dem in den Figuren 2a bis 2c dargestellten Ausführungsbeispiel ist das Widerlager 12 für den Bajonettverschluss jedoch durch punktförmige Sicken oder Körnungen 12b gebildet. In dem dargestellten Ausführungsbeispiel sind, wie dies besonders gut aus Figur 3b ersichtlich ist, vier punktförmige Körnungen 12b am Umfang der Seitenwandung 10 des Gehäuses 1 vorgesehen. Wichtig ist dabei, dass die Körnungen 12b gleichmäßig über den Umfang der Seitenwandung 10 verteilt sind, so dass ein Verkippen des Spannrings 6 vermieden wird. Der Spannring 6 unterscheidet sich von dem des Ausführungsbeispiels aus den Figuren 2a bis 2c dadurch, dass keine Ausnehmungen 61 als Verdrehhilfe für den Ring vorgesehen sind. Zusätzlich zu den Freistellungen 60 für die Widerlager weist der Spannring 6 jedoch zusätzliche Ausnehmungen 63 auf, die derart angeordnet sind, dass der Spannring über das sickenartig eingebrachte Gewinde 13 in den Gehäusedeckel 1 eingebracht werden kann.

In Figur 3c ist außerdem zu erkennen, dass in diesem Ausführungsbeispiel kein Zentrierring vorgesehen ist. Eine Ausrichtung der Silikon-Formdichtung 3 sowie des Sichtfensters 4 erfolgt lediglich durch die in dem Sichtfenster vorgesehene Stufe 41.

### Bezugszeichenliste

- 1: Gehäuse
- 2: Zentrierring
- 3: Dichtelement
- 4: Schauglas
- 5: Federanordnung /-ring
- 6: Spannring
- 10: Seitenwandung
- 11: Rand
- 12: Widerlager
- 12a: Sicke
- 12b: Körnung
- 13: Gewinde

- 40: Rand
- 41: Stufe

- 60: Freistellung
- 61: Ausnehmung
- 63: Ausnehmung

## Patentansprüche

1. Füllstand- oder Druckmessgerät mit einem topfförmigen Gehäusedeckel (1) mit einer zylindrischen Seitenwandung (10) und einem bodenseitig festgelegten Schauglas (4),
**dadurch gekennzeichnet, dass**
das Schauglas (4) mit einem Bajonettverschluss gehalten ist.

2. Gehäusedeckel (1) nach Anspruch 1,
**dadurch gekennzeichnet, dass**
zwischen dem Bajonettverschluss und dem Schauglas (4) eine Federanordnung (5) vorgesehen ist.

3. Gehäusedeckel (1) nach einem der vorhergehenden Ansprüche,
**dadurch gekennzeichnet, dass**
die Federanordnung als Federring (5) ausgebildet ist.

4. Gehäusedeckel (1) nach einem der vorhergehenden Ansprüche,
**dadurch gekennzeichnet, dass**
der Gehäusedeckel (1) aus einem Blech geformt ist.

5. Gehäusedeckel (1) nach Anspruch 4,
**dadurch gekennzeichnet, dass**
der Gehäusedeckel (1) durch Tiefziehen hergestellt wird.

6. Gehäusedeckel (1) nach einem der vorhergehenden Ansprüche,
**dadurch gekennzeichnet, dass**
der Gehäusedeckel (1) einen umlaufenden Rand (11) als
Auflagefläche für das Schauglas (4) aufweist.

7. Gehäusedeckel (1) nach Anspruch 6,
**dadurch gekennzeichnet, dass**
zwischen dem Schauglas (4) und dem Rand (11) ein Dichtelement (3) vorgesehen ist.

8. Gehäusedeckel (1) nach Anspruch 7,
**dadurch gekennzeichnet, dass**
das Dichtelement eine Silikon-Formdichtung (3) ist.

9. Gehäusedeckel (1) nach Anspruch 7 oder 8,
**dadurch gekennzeichnet, dass**
ein Zentrierring (2) zur Ausrichtung des Dichtelements (3) vorgesehen ist.

10. Gehäusedeckel (1) nach einem der Ansprüche 4 bis 9,
**dadurch gekennzeichnet, dass**
ein Widerlager (12) für den Bajonettverschluss durch wenigstens zwei Sicken (12a) gebildet ist.

11. Gehäusedeckel (1) nach einem der Ansprüche 4 bis 9,
**dadurch gekennzeichnet, dass**
ein Widerlager (12) für den Bajonettverschluss durch linienförmig angeordnete Körnungen (12b) gebildet ist.

12. Gehäusedeckel (1) nach einem der vorhergehenden Ansprüche,
**dadurch gekennzeichnet, dass**
der Bajonettverschluss ringförmig ausgestaltet ist.

13. Gehäusedeckel (1) nach einem der vorhergehenden Ansprüche,
**dadurch gekennzeichnet, dass**
der Bajonettverschluss zusätzliche Ausnehmungen (61) als Verdrehhilfe aufweist.
